# EUROPEAN PATENT APPLICATION

(11) **EP 4 776 529 A1**
(43) Date of publication of application: **15.07.2026**
(21) Application number: 25151843.7
(22) Date of filing: 14.01.2025
(51) Int. Cl.: H04B 10/40, H04Q 11/00

(54) **NETWORK SUB-SYSTEM**

(71) Applicant: Oriole Networks Ltd, London EC1Y 2AA (GB)
(72) Inventor: Regan, James Dominic, London, EC1Y 2AA (GB)
(74) Representative: Gill Jennings & Every LLP

(57) **Abstract**

A network sub-system for an optical network is provided, the optical network comprising a plurality of nodes connected by optical signal paths, the network sub-system being provided at a node of the plurality of nodes and comprising: a network termination unit; a data conversion chip configured to communicate electrical data signals to and from the network termination unit, and further configured to convert between electrical data signals and optical data signals; an optical switching chip configured to direct optical data signals across the optical network in accordance with selected optical signal path and wavelength; wherein the network termination unit and the data conversion chip are provided on a first circuit module; the optical switching chip is separate from the data conversion chip; and the data conversion chip and the optical switching chip are in optical communication with each other, whereby optical data signals for communication to and from said node are communicated between the data conversion chip and the optical switching chip.

## Description

### FIELD OF THE INVENTION

The present invention relates to a network sub-system for communication of data in an optical network.

### BACKGROUND

The volume of data within cloud data centres, machine learning systems, high performance computing and telecommunication networks has accelerated in growth significantly faster than the growth of network bandwidth supported by traditional electronic packet-switched (EPS) networks. Indeed, in some cases, the EPS network itself is the bottleneck in performance, thus making EPS networks unfeasible for certain applications.

There is currently significant interest in optical networks to meet the ever-increasing data demands of modern computing applications. Such optical networks communicate data across the network in the optical domain and utilise optical switching capability, reducing the need for electrical switching and therefore significantly reducing latency and power consumption. An example of an optical network architecture is provided in WO2024/110752.

However, a problem exists in that data from the processing units of the network (e.g. GPUs, CPUs etc.) need to be transferred in the electrical domain to the optical transceivers, located separately from the processing networks, for subsequent conversion into the optical domain for communication across the network and for optical switching. This transfer of the electrical data over electrical interconnects (e.g. PCIe interconnects) from the processing units to the optical transceivers can limit data flow and therefore create a bottleneck, negating the benefits of the optical networks.

There is therefore a requirement to overcome these problems.

### SUMMARY OF INVENTION

In accordance with a first aspect of the invention there is provided:
a network sub-system for an optical network, the optical network comprising a plurality of nodes connected by optical signal paths, the network sub-system being provided at a node of the plurality of nodes and comprising:
a network termination unit;
a data conversion chip configured to communicate electrical data signals to and from the network termination unit, and further configured to convert between electrical data signals and optical data signals;
an optical switching chip configured to direct optical data signals across the optical network (e.g. to and from said node) in accordance with selected optical signal path and wavelength; wherein
the network termination unit and the data conversion chip are provided on a first circuit module;
the optical switching chip is separate from (e.g. spaced from) the data conversion chip; and
the data conversion chip and the optical switching chip are in optical communication with each other, whereby optical data signals for communication to and from said node are communicated between the data conversion chip and the optical switching chip.

The inventors have realised that since the electrical to optical (and vice-versa) conversion functions are agnostic to the optical switching functions, these functionalities can be provided on separate chips located remotely from each other within the node. Moreover, the data conversion chip implementing the electrical to optical conversion functionality can be provided on the same circuit module as the network termination unit of the node. In this way, the electrical data signals from the network termination unit can be converted to the optical domain closer to the network termination unit compared to state-of-the-art architectures, therefore avoiding the bottleneck and power loss of transmitting high speed data over electrical interconnects (e.g. PCIe bus) for conversion to the optical domain.

In the present invention, the optical data signals for communication to and from the node over the optical network are communicated between the data conversion chip and the optical switching chip. As the data conversion chip is located on the first circuit module along with the network termination unit (e.g. in electrical communication with each other), this advantageously enables a significant increase in data rate from the network termination unit to the optical switching components and reduces latency and power consumption within the network by minimising the distance over which electrical data signals are communicated to and from the network termination unit. Additionally, the optical connectivity between the data conversion chip and the optical switching chip advantageously provides both the optical-electrical conversion and switching functionality within a small physical space (within the same network node). For example, the optical switching chip may be placed a short distance from the data conversion chip (e.g. as a pluggable module or on a board) to enable the optical-electrical and switching functionality to occur within the same node whilst still providing the benefits of the data conversion chip being in close proximity with the network termination unit.

Moreover, due to the separation of the data conversion chip and the optical switching chip, this beneficially provides improved flexibility in the platform used for each chip.

The data conversion chip (configured to perform the electrical/optical conversion functions) may be referred to as a data conversion "chiplet". Similarly, the optical switching chip (configured to perform the optical switching functions) may be referred to as an optical switching "chiplet". In typical embodiments, the data conversion chip is located closer to the network termination unit than the optical switching chip.

The data conversion chip and the optical switching chip are preferably in optical communication with each other via one or more optical fibres. The one or more optical fibres may typically be implemented as multiple (single core) fibres (e.g. a ribbon optical fibre cable) or as one or more multi-core fibres. However, it is envisaged that alternatively the data conversion chip and the optical switching chip may be in optical communication with each other via a free space optical connection, an optical PCD and/or an optical interposer.

The data signals represent one or more units of data (e.g. one or more data packets). Corresponding optical and electronic data signals (for example an electrical data signal having been converted to a corresponding optical data signal by the data conversion chip) represent the same unit(s) of data.

The network termination unit may be a termination point of data. The network termination unit may be any one of (but not limited to): a processing unit (e.g. a central processing unit, CPU, a graphics processing unit, GPU, a tensor processing unit, TPU or a neural processing unit NPU), a storage unit (e.g. a solid state drive, SSD, unit or a hard disk drive, HDD, unit), a switching unit, a memory unit (e.g. a double data rate, DDR, unit or a hybrid memory cube, HMC, unit).

As outlined above, the network termination unit and the data conversion chip are provided on a first circuit module. The first circuit module may comprise (or be) a circuit board. The first circuit module may comprise (or be) a single or multi-package circuit unit. The first circuit module may be a computer card. In embodiments the first circuit module is a central processing unit, CPU, card.

The data conversion chip may be provided in a first (e.g. single) physical unit. The first unit may be pluggable. The data conversion chip may comprise at least one photonic integrated circuit, PIC, and/or co-packaged optics module.

Preferably, the data conversion chip and the network termination unit are provided in the same (e.g. single) physical package. For example, the data conversion chip and the network termination unit may be co-packaged or in-packaged.

This advantageously minimizes the electrical path distance between the network termination unit and the data conversion chip, and the conversion between the optical and electrical domains occurs as close as possible to the network termination unit.

The optical switching chip is preferably separate from the first circuit module. The optical switching chip is preferably provided on a second circuit module separate from the first circuit module. The second circuit module may comprise (or be) a circuit board. The second circuit module may comprise (or be) a single or multi-package circuit unit. The second circuit module may be a computer card such as a network interface card, NIC. The optical switching chip may comprise at least one photonic integrated circuit, PIC, and/or co-packaged optics module. The optical switching chip may be provided in a (e.g. single) physical unit that is preferably pluggable, or may be provided in other forms such as a mid-board unit.

Typically, the data conversion chip comprises a modulator configured to modulate received light from a light source provided remotely from the data conversion chip, the light from the light source being provided at a selected optical wavelength for propagating an optical data signal to the optical network.

By modulating the light received from a remotely located light source, the data conversion chip is configured to convert an electrical data signal to a corresponding optical data signal. In other words, the modulator is configured to encode the data onto the received light to generate encoded light. The modulation may utilise modulation protocols known in the art such as pulse amplitude modulation 4-level (PAM4) or non-return to zero (NRZ) modulation. Typically, the data conversion chip will comprise a plurality of modulators each configured to modulate received light from the remote light source.

The light received at the modulator(s) of the data conversion chip is provided by (e.g. originates from) a light source provided remotely from the data conversion chip. In other words, the light source is located physically separate and spaced from the data conversion chip. Thus, the data conversion chip does not comprise a light source. In this way, by not requiring a light source to be located on or as part of the data conversion chip, the data conversion chip may have a reduced size form factor and consume significantly reduced amounts of power. This advantageously enables the data conversion chip to be located on the first circuit module and therefore in close proximity to (and in some embodiments co-packed or in-packaged with) the network termination unit. Preferably the light source is provided remotely from the first circuit module.

In some embodiments, the data conversion chip may comprise one or more wavelength sensitive devices configured to adjust the electrical bias of the modulator(s). Such wavelength sensitive devices may be used when the modulator(s) are wavelength sensitive and consequently it is desirable to adjust the electrical bias of the modulator(s) in dependence on the wavelength of the received light. Thus, preferably, the wavelength sensitive device(s) are configured to adjust the electrical bias of the modulator(s) dependent on the wavelength of light received from the light source.

The network sub-system preferably comprises an optical loop path whereby modulated light from the modulator is directed (e.g. "looped back") to the optical switching chip. Thus, light at the selected optical wavelength is sent from the remote light source to the data conversion chip where the electrical data signal is encoded onto the light by the modulator, and re-directed back, in the form of an encoded optical data signal, to the optical switching chip for propagation over the network via one or more selected optical paths. In this way, the network sub-system provides wavelength and space switching capability, with the advantages of the optical to electrical conversion occurring close to the network termination unit. Preferably, the light source is provided on the optical switching chip. However, it is envisaged that in alternative embodiments the light source may be provided separately from the optical switching chip.

Typically, the light source comprises (or is) at least one of:
a fixed wavelength laser;
a tunable laser configured to emit different wavelengths of light;
a plurality (e.g. array) of fixed wavelength lasers having different wavelengths of light.
a plurality (e.g. array) of tunable lasers configured to emit different wavelengths of light.

In embodiments in which the light source comprises a plurality of fixed or tunable lasers, the light source is typically provided as a single module (package). The lasers are typically semiconductor lasers and may operate in any of the O, E, S, C or L bands.

Preferably, the data conversion chip comprises at least one photodetection device configured to receive an optical data signal from (e.g. directed from) the optical switching chip, and wherein the at least one photodetection device is configured to convert the received optical data signal to electrical form.

In this way, the data conversion chip is configured to convert an optical data signal received at the node from the network to a corresponding electrical data signal. Advantageously, the data signal received at the data conversion chip is an optical data signal (i.e. in the optical domain), reducing the requirements for data signals to be sent over electrical interconnects and therefore reducing latency in the network. In other words, the optical to electrical conversion of the received data signal occurs on the first circuit module in close proximity to the network termination unit.

The at least one photodetection device is typically a photodiode.

The network sub-system may further comprise one or more electronic integrated circuits (typically provided on the first circuit module), the one or more electronic integrated circuits comprising at least one electronic amplification device for amplifying an electronic signal provided by the data conversion chip and/or at least one electronic driver device for driving at least one component of the data conversion chip. For example, the at least one electronic amplification device (such as a transimpedance amplifier) may be configured to amplify the electrical signal output from one or more photodetection devices on the data conversion chip to the required power level. The at least one driver device may be configured to drive the modulator(s) on the data conversion chip accordingly.

In embodiments, the one or more electronic integrated circuits are integrated with the data conversion chip. For example, the data conversion chip and the one or more electronic integrated circuits may be provided as a single chip. In other words, the photonics devices (e.g. the modulator(s) and/or photodetection device(s)) of the data conversion chip and the electronic amplification device(s) and/or electronic driver device(s) of the electronic integrated circuit may be provided on a single chip. In some implementations, the data conversion chip and the one or more electronic integrated circuits may be provided as a three-dimensional stack.

As described above, the optical switching chip is configured to direct (e.g. "switch" or "guide") optical data signals across the optical network (e.g. to and from other nodes of the optical network) in accordance with selected optical signal path and (optical) wavelength. Preferably, each optical data signal is assigned a selected optical wavelength and optical signal path for propagation across the network. In this way, data is communicated across the network to and from the node in the optical domain, and where advantageously the opto-electrical conversion occurs in close proximity to the network termination unit. The optical signals may typically also be transmitted and received in accordance with selected timing information.

Typically, the optical switching chip comprises a transmission switching structure configured to direct (e.g. "switch" or "guide") an optical data signal received from the data conversion chip to a selected output port of the node for propagation over at least one optical signal path in the optical network to at least one other node of the plurality of nodes. The (optical) transmission switching structure may comprise at least one of: an optical splitter, one or more Mach Zehnder Interferometers (MZI), one or more semiconductor optical amplifier (SOA) sub-microsecond speed switches, an arrayed waveguide grating router, AWGR. The switching structure may be a one to many (1xN) or a many to many (MxN) structure.

Typically, the network sub-system comprises an amplifier, such as a semiconductor optical amplifier, for amplifying the optical data signal to the required power level before it is propagated to the network. The amplifier is typically provided on the optical switching chip and in some cases may be a constituent part of the switching structure.

Typically, the optical switching chip comprises a receiving switching structure configured to direct an optical data signal from an input port of the node to the data conversion chip for reception by at least one photodetection device of the data conversion chip that is configured to convert the received optical data signal received to electrical form. The network sub-system (typically the optical switching chip) may preferably further comprise a filter component for optically separating the optical data signal prior to reception by the least one photodetection device

The (optical) receiving switching structure may comprise at least one of: an optical combiner, one or more Mach Zehnder Interferometers (MZI), one or more semiconductor optical amplifier (SOA) sub-microsecond speed switches, an arrayed waveguide grating router, AWGR. The switching structure may be a many to one (Nx1) or a many to many (NxM) structure.

The filter component may comprise at least one of a fixed filter, a tunable filter, a wavelength de-multiplexer. The filter component may comprise a ring-resonator structure, Mach Zehnder Interferometer (MZI) or a grating structure.

The network sub-system of the first aspect of the invention preferably comprises a wavelength selector for selecting an optical wavelength from a plurality of selectable wavelengths, as the basis for propagating the optical data signal. The plurality of selectable wavelengths are preferably provided by a light source comprising one or more tunable lasers. The network sub-system of the first aspect of the invention preferably comprises an optical signal path selector for selecting an optical signal path from a plurality of selectable optical signal paths, as the basis for propagating the optical data signal. The selection of the optical signal path is typically implemented by the transmission and/or receiving switching structure of the optical switching chip.

The wavelength selector and/or the optical signal path selector are typically implemented as one or more electronic integrated circuits such as one or more ASICs or FPGAs, configured to control the optical switching chip 420.

The network sub-system may further comprise a time selector for selecting timing information (e.g. a time slot) for transmitting, from said one node, an optical data signal. Typically, each node in the optical network implements time-division multiplexing for the transmission and receipt of optical data signals across the network.

A network sub-system in accordance with the invention may be provided at each node of the network (i.e. each node comprises a network sub-system according to the invention), or at each of a subset of the nodes of the optical network.

In accordance with a second aspect of the invention there is provided
a network sub-assembly for an optical network, the optical network comprising a plurality of nodes connected by optical signal paths, the network sub-system being provided at a node of the plurality of nodes and comprising:
   a data conversion chip configured to communicate electrical data signals to and from a network termination unit of the node provided on a first circuit module, and further configured to convert between electrical data signals and optical data signals;
   an optical switching chip configured to direct optical data signals across the optical network in accordance with selected optical signal path and wavelength; wherein
   the data conversion chip is configured to be provided on the first circuit module;
   the optical switching chip is separate from the data conversion chip; and
   the data conversion chip and the optical switching chip are in optical communication with each other, whereby optical data signals for communication to and from said node are communicated between the data conversion chip and the optical switching chip.

Thus, the network sub-assembly of the second aspect of the invention provides all of the advantages of the first aspect of the invention, such as reduced latency and power consumption within the optical network. Such a network sub-assembly may include any of the features discussed above in the first aspect of the invention.

In accordance with a further aspect of the invention there is provided a node for an optical network comprising a network sub-system of the first aspect, or a network sub-assembly of the second aspect.

Further disclosed herein is a data conversion chip for an optical network, the optical network comprising a plurality of nodes connected by optical signal paths, the data conversion chip being provided at a node of the plurality of nodes, wherein
the data conversion chip is configured to be provided on a first circuit module and is configured to communicate electrical data signals to and from a network termination unit of the node, and is further configured to convert between electrical data signals and optical data signals; and
the data conversion chip is configured to be in optical communication with an optical switching chip separate from the data conversion chip, the optical switching chip configured to direct optical data signals across the optical network in accordance with selected optical signal path and wavelength; whereby
optical data signals for communication to and from said node are communicated between the data conversion chip and the optical switching chip.

Such a data conversion chip may include any of the features discussed above.

Further disclosed herein is an optical switching chip for an optical network, the optical network comprising a plurality of nodes connected by optical signal paths, the optical switching chip being provided at a node of the plurality of nodes, wherein
the optical switching chip is configured to direct optical data signals across the optical network in accordance with selected optical signal path and wavelength;
the optical switching chip is configured to be in optical communication with a data conversion chip provided on a first circuit module and that is configured to communicate electrical data signals to and from a network termination unit of the node (e.g. provided on the first circuit module), and that is further configured to convert between electrical data signals and optical data signals; and wherein
the optical switching chip is separate from the data conversion chip; and
the data conversion chip and the optical switching chip are in optical communication with each other (e.g. via one or more optical fibres), whereby optical data signals for communication to and from said node are communicated between the data conversion chip and the optical switching chip.

Such an optical switching chip may include any of the features discussed above.

### BRIEF DESCRIPTION OF THE DRAWINGS

Examples of the invention will now be described with reference to the appended drawings, in which:-
Figure 1 schematically illustrates an example node that may be used in an optical network according to the state of the art;
Figure 2 schematically illustrates an example photonic integrated circuit according the state of the art;
Figure 3 schematically illustrates an example optical network;
Figure 4 schematically illustrates a node comprising a network sub-system according to an embodiment of the invention;
Figure 5 schematically illustrates an example node comprising a network sub-system according to a further embodiment of the invention; and
Figure 6 schematically illustrates an example node comprising a network sub-system according to a further embodiment of the invention.

### DETAILED DESCRIPTION

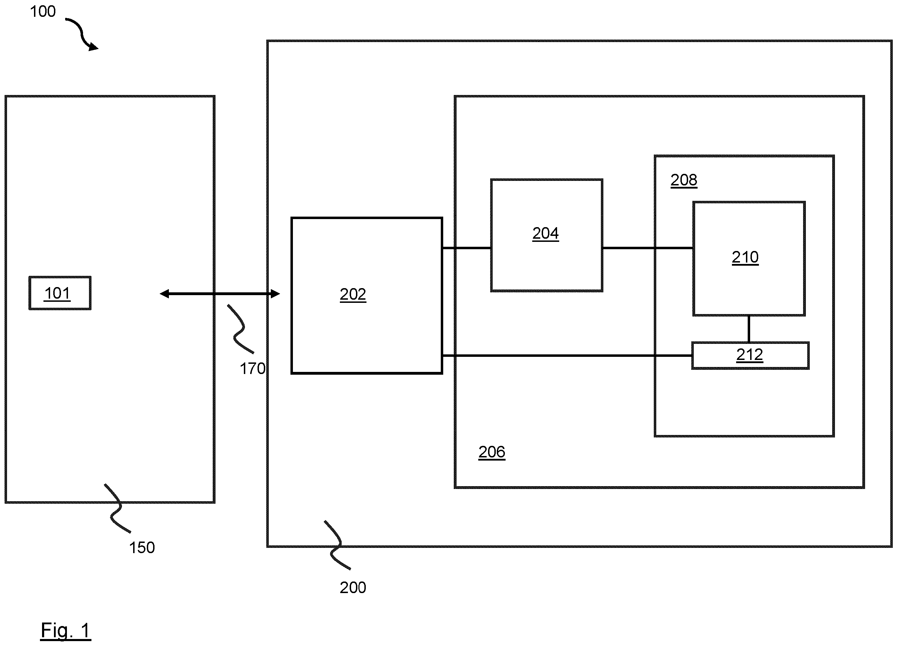

Figure 1 schematically illustrates an example node 100 that may be used in an optical network according to the state of the art. Each node 100 of an optical network is a physical or logical entity within the network 100 to and from which data may be communicated across the network (in the form of light signals). For example, the node may be (but not limited to) a compute node, a memory node or a server node Each node 100 may be associated with a data centre. The node 100 comprises a CPU card 150 and a network interface card (NIC) 200. The CPU card 150 and the NIC 200 may be part of a server. The CPU card comprises a processing unit 101 which may typically be a CPU, GPU, TPU or FPU depending on the processing requirements of the node.

The NIC 200 comprises a field-programmable gate array (FPGA) 202, a controller 204, and an optical engine 208. The optical engine 208 is a high-speed circuit board configured to accommodate a photonic integrated circuit (PIC) 210. As will be explained herein, the PIC 210 includes optical components configured to implement transmit and receive portions of the node for the communication of data to and from the node 100 across the optical network. The optical engine 208 also comprises one or more electronic integrated circuits (EICs) 212 containing electronic amplification devices (e.g. transimpedance amplifiers) and driver devices for the PIC 210. The FPGA 202 provides programmable logic that can be tailored to perform specific tasks in real time. The controller 204 is configured to provide control instructions to the FPGA 202 and the PIC 210.

The controller 204 and the optical engine 208 may be provided on a pluggable unit 206 that provides an installation platform for the optical engine 208.

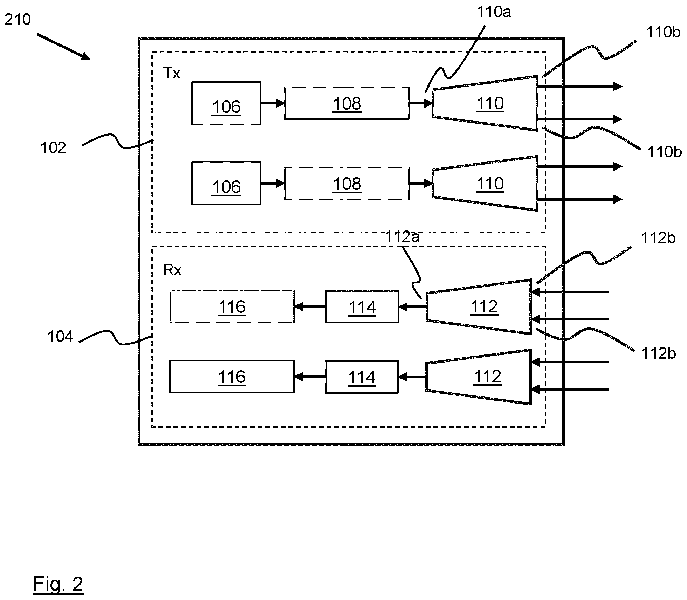

Figure 2 schematically illustrates the various components of the PIC 210 in more detail. As outlined above, the node 100 may be considered to have a transmit portion and a receive portion for the communication of data to and from the node across the network in the optical domain. The node 100 provides both wavelength and space switching capability. The PIC 210 is configured to provide the optical componentry for implementation of the transmit and receive portions as schematically shown in Figure 2.

The transmit portion 102 comprises one or more (Y) independent optical datapaths, for example to support the connection of Y connection groups within the network. In this example, the node comprises Y=2 independent optical datapaths. Each optical datapath in a node 100 is implemented by a laser 106, a modulator 108, and a 1 to many (1xX) optical switching structure 110. The laser 106 is typically a wavelength-tuneable semiconductor laser 106 that can be tuned to very specific wavelengths and preferably has a wavelength tuning time of less than 100 ns. In some embodiments a plurality of tunable lasers may be used. In other embodiments fixed wavelength lasers or a plurality of lasers having different fixed wavelengths may be used.

The modulator 108 is configured to encode data onto light generated by the laser 106 to generate encoded light. The modulator 108 could be a 56 Gbaud PAM4 optical modulator 108 configured to adjust the amplitude of light output by the laser 106 to encode a symbol.

The 1xX optical switching structure 110 is an optical component comprising one input port 110a and X output ports 110b, such as an optical splitter, Mach Zehnder Interferometer(s) (MZI) or optical switch(es). The switching structure 110 is configured to receive the modulated light output by the modulator 108 and "steer" the modulated light such that it is output at one of the X output ports. At every reconfiguration, the 1xX switch is configured to select one of the X output ports (or paths).

Each output port is typically connected to another component, such as an output optical fibre (not shown).

Each optical datapath of the transmit portion further comprises an amplifier (not shown) configured to amplify the optical signal from the modulator 108 to optimum power for transmission over the network by the 1xX optical switching structure 110.

The receive portion 104 comprises a many to one (Xx1) optical switching structure 112, a filter component 114, and a photodetection device 116. The Xx1 optical switching structure 112 is an optical component comprising X input ports 112b and one output port 112a, such as a combiner 112, MZI(s) or optical switch(es). Each input port of the combiner 112 is configured to receive a respective optical data signal, and the combiner 112 is configured to aggregate the received optical signals into a single output optical signal. The filter component 114 is configured to receive the optical signal output by the combiner 112 and isolate a desired wavelength or set of wavelengths. The photodetection device 116, such as a photodiode 116, is configured to receive the corresponding optical signal output by the filter component 114, and generates an electrical signal based on various properties of the received optical signal.

Each optical datapath of the receive portion further comprises an amplifier (not shown) configured to amplify the optical signal from the combiner 112 before being passed to the filter component 114.

The PIC 210 is in communication with the FPGA 202 and the controller 204, so that the controller can control the components of the transmit portion 102 and the receive portion 104 in accordance with the selected optical wavelength and optical path. As is schematically shown in Figure 1, the NIC 200 is in electrical data communication with the CPU card 150 via high-speed electrical interconnect, represented by double-headed arrow 170. Thus, data for transmission across the optical network (e.g. data packets) from the processing unit 101 are transmitted from the CPU card 150 to the NIC 200 whereby the transmission of the data via the PIC 210 can be controlled accordingly through wavelength and/or space switching. Similarly, optical data signals received through the receive datapath(s) of the node 100 can be transmitted to the processing unit 101 across the interconnect 170. The electrical interconnect 170 connecting the NIC 200 to the CPU card 150 is typically a Peripheral Component Interconnect Express (PCIe) interconnect.

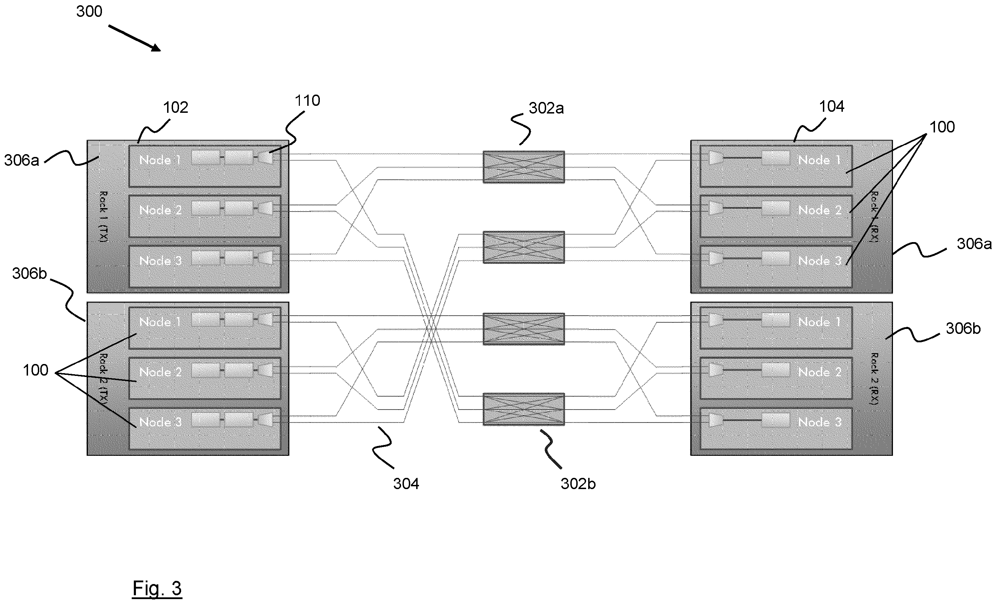

Figure 3 schematically illustrates an example optical network 300. The optical network 300 comprises a plurality of nodes 100. For simplicity, the nodes 100 are split in the diagram so that the transmit portions 102 are illustrated on the leftmost side, whilst the receive portions 104 are illustrated on the rightmost side. As discussed above, each transmit portion 102 comprises a plurality of independent optical datapaths, each comprising a laser 106, modulator 108, and optical switch 110. Encoded light from the transmit portion 102 is routed to the appropriate destination (i.e., receive portion 104), based on the wavelength of the encoded light, using an arrayed waveguide router (AWGR) 302. The AWGRs are in communication with the transmit portions 102 and receive portions 104 via optical fibres shown generally at 304. Thus, data may be routed between source and destination nodes along a selected optical signal path of the network in accordance with a selected wavelength.

The nodes 100 are arranged into a plurality of racks 306 (here, two racks 306a, 306b), each rack comprising a number of nodes 100 equal to the number of wavelengths Λ supported by the AWGRs 302. For example, the number of wavelengths Λ supported by the AWGRs 302 could be in the range of 2 to 64 wavelengths. In the illustrated example, the number of wavelengths Λ supported by each AWGR 302 is 3 and therefore, the number of nodes in each rack 306 is 3. Each node 100 in a rack 306 is assigned a respective wavelength ("colour"). In this way, encoded light from a source node in a rack 306 to a destination node in the rack 306 can be achieved by using the wavelength assigned to the destination node.

Since each node 100 comprises at least one 1xX optical switching structure 110, the encoded light can be steered to one of X output ports, each being associated with a respective AWGR 302. This provides scalability beyond a single rack 306, because each AWGR 302 is associated with a different rack 306. For example, as shown in Figure 3, the upmost transmit portion 102 comprises an optical switch 110 having X=2 output ports. The upper output port is connected to an AWGR 302a that provides communication with the upper rack 306a, whilst the lower output port is connected to an AWGR 302b that provides communication with the lower rack 306b. The number of racks 306 that can be reached by a single optical switch 110 is equal to the number of output ports (X). To facilitate communication with these additional racks, X² AWGRs 302 are required. In the example of Figure 3, each node comprises a single transmit datapath and a single receive datapath. Further scaling of the network can be achieved by including a plurality of (Y) independent optical datapaths, for example as seen in Figure 2 which illustrates two independent optical datapaths within the node.

In order to avoid interference when communicating data in the network, the nodes transmit in timeslots (e.g. ~100ns duration) under the control of one or more schedulers in the network. Within each timeslot, a node will be assigned a particular wavelength and spatial path for communication with other node(s). Control signals controlling the scheduling and assignment of timeslot parameters may be provided across the network by the schedulers on a control plane separate from the data plane in which data is transmitted in the form of optical data signals. The clock synchronisation between nodes, and clock data recovery (CDR), may be achieved using techniques and protocols known in the art.

Referring back to Figure 1, as discussed, the CPU card 150 is in communication with the NIC 200 via a high speed electrical interconnect 170, such as a PCIe bus (e.g. PCIe Gen5 or PCIe Gen6). The rate of data transfer across the electrical interconnect represents a bottleneck in the dataflow into the NIC 200 and therefore a bottleneck in the flow of data across the network.

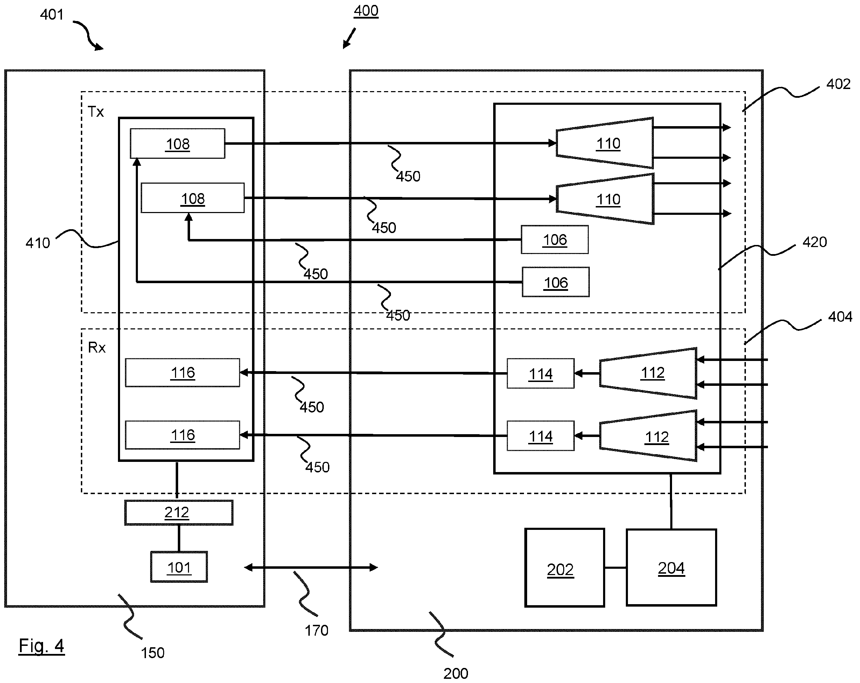

Figure 4 schematically illustrates an example node 400 incorporating a network sub-system 401 according to an embodiment of the invention. The network sub-system 401 utilises similar components as discussed above with reference to node 100 (with like reference numerals indicating like components); however, the network sub-system 401 provides an advantageous architecture as will now be described. Such a node 400 including a network sub-system according to the invention can be implemented within an optical network such as network 300 illustrated in Figure 3 to provide advantageous reductions in power consumption and latency.

The node 400 comprises a network termination unit 101. For the purposes of the following description, the network termination unit will be described as a processing unit (e.g. CPU, GPU or other processing unit). However, it will be appreciated that the network termination unit may be alternatively be a storage unit, a switching unit or a memory unit depending on the functionality of the node.

In the architecture of node 400 illustrated in Figure 4, in addition to the processing unit 101, the CPU card 150 comprises a data conversion chip 410 (hereafter referred to as "data conversion chiplet"). The network sub-system comprises a separate circuit module 200 that comprises an optical switching chip 420 (hereafter referred to as "optical switching chiplet"). The data conversion chiplet 410 on the CPU card 150 and the optical switching chiplet 420 on the circuit module 200 are in data communication with each other via optical fibres 450 connecting various optical components of the chiplets as will be explained below. The optical fibres connecting the data conversion chiplet 410 and the optical switching chiplet 420 are typically implemented as a ribbon fibre. Additionally, the node 400 comprises one or more EICs 212 located on the CPU card 150, an FPGA 202 and a controller 204. In this example the FPGA 202 and the controller 204 are located on the circuit module 200. The module 200 may be a NIC or a switch-laser card for example.

The data conversion chiplet 410 is configured to receive electrical data signals from the processing unit 101 and convert these into corresponding optical data signals for transmission to the optical switching chiplet 420 on the NIC 200 over the optical fibres 450. The optical switching chiplet 420 is configured to direct ("switch") these optical data signals to one or more other nodes across the network in accordance with the selected optical path and wavelength.

Additionally, the optical switching chiplet 420 is configured to direct one or more optical data signals received from the network and to the data conversion chiplet 410 located on the CPU card 150, over optical fibres 450. Once the optical data signals have been communicated to the CPU card 150 in the optical domain, the data conversion chiplet 410 is configured to convert them into corresponding electrical data signals, for example for processing by the processing unit 101.

In this way, the architecture of node 400 means that data for communication to and from the node across the network is transferred between the CPU card 150 and the module 200 in the optical domain, advantageously avoiding the dataflow bottleneck of sending electrical data signals across the PCIe bus 170.

Similarly to the node 100 described in relation to Figures 1 and 2, node 400 utilises Y=2 independent optical data paths. However, this number is not limiting and the number (Y) of optical datapaths could be less than or greater than 2, for example, 4, for further scalability. The data conversion chiplet 410 comprises Y=2 modulators 108 and Y=2 photodetection devices 116 such as photodiodes. The data conversion chiplet 410 on the CPU card 150 does not comprise a light source. The optical switching chiplet 420 in turn comprises Y=2 wavelength tuneable lasers 106 and Y=2 1xX transmission optical switching structures 110. In this example, the 1xX optical switching structures are 1xX splitters 110, although other switching components such as Mach-Zehnder interferometers or SOA-based optical switches could be used. Each optical switching structure 110 comprises two X=2 output ports in this embodiment. However, this is not limiting, and the number (X) of output ports may be greater than 2, for example 8, for further scalability.

The optical switching chiplet 420 further comprises Y=2 Xx1 receiving optical switching structures 112 and Y=2 filter components 114. In this embodiment, the Xx1 switching structures 112 are Xx1 combiners although other switching components such as Mach-Zehnder interferometers or SOA-based optical switches could be used. In this example, the filter components 114 are tuneable filters.

The lasers 106 are semiconductor lasers that may be tuned to specific wavelengths with tuning times typically less than 100ns. In some cases a plurality of tuneable lasers may be used. Although wavelength tuneable lasers 106 are described in the current embodiment, in alternative embodiments one or more fixed wavelength lasers may be used.

In this embodiment the modulators 108 are PAM4 modulators (e.g. 56 Gbaud PAM4 optical modulators) configured to adjust the amplitude of light output by the laser 106 to encode a symbol. However, other modulation protocols may be used as are known in the art.

Thus, the node 400 can be considered to comprise a transmit portion 402 and a receive portion 404, schematically outlined in Figure 4. Considering the transmit portion 402, for each independent optical datapath, wavelength-switched light is sent from the tuneable laser 106 on the optical switching chiplet 420 through the corresponding modulator 108 on the optical conversion chiplet 410 and looped back to the corresponding 1xX optical splitter 110 on the optical switching chiplet 420. In this way, the tuneable laser 106, modulator 108 and 1xX optical switch 110 define an optical loop path for the wavelength-switched light.

Electrical data signals from the processing unit 101 are sent to the modulators 108 on the data conversion chiplet 410. The modulators 108 are then configured to encode the electrical data signals received from the processing unit 101 onto the light generated by the remotely located lasers 106 to generate encoded light. In this way, the electrical data signals from the processing unit 101 are converted to corresponding optical data signals on the data conversion chiplet 410. In some embodiments, the data conversion chiplet 410 may comprise one or more wavelength sensitive devices (not shown) configured to adjust the electrical bias of the modulators 108. Such wavelength sensitive devices may be used in embodiments in which the modulators 108 are wavelength sensitive and consequently it is desirable to adjust their electrical bias in dependence on the wavelength of the received light from the lasers 106.

Each transmit datapath typically further comprises an amplifier (not shown), such as a semiconductor optical amplifier, for amplification of the optical signal generated by the modulators to the required power. The amplifiers are typically provided on the optical switching chiplet 420 on the module 200, and may form a component part of the transmission switching structure 110.

Although in the presently described embodiment each independent transmission optical datapath comprises a corresponding laser, modulator and 1xX optical splitter, in some implementations it is envisaged that a single wavelength switched source such as a tuneable laser 106 may be shared amongst several modulators 108 on the data conversion chiplet.

Considering the receive portion 404, each Xx1 optical receiving switching structure 112 is coupled to a filter component 114. Each filter component 114 is configured to receive the optical signal output by the switching structure 112 and isolate a desired wavelength or set of wavelengths for communication to a respective photodetection device 116 on the data conversion chiplet 410 located on the CPU card 150. The photodetection device 116 (in this embodiment a photodiode) generates an electrical signal based on the properties of the received optical signal. This electrical signal is passed on to the processing unit.

In this embodiment, the EIC 212 comprises one or more electronic amplification devices such as transimpedance amplifiers (TIAs) for amplifying the electrical signal generated by the photodetection devices. The EIC 212 further comprises electronic driver devices for driving the components (e.g. modulators) of the data conversion chiplet 410. It is envisaged that in some embodiments, the data conversion chiplet 410 can be integrated with the electronic integrated circuit functionality 212, for example as a single chip and/or in a three-dimensional stack for location close to the processing unit 101.

Each receive datapath typically further comprises an amplifier (not shown), such as a semiconductor optical amplifier, for amplification of the optical signal received by the combiners 112. The amplifiers are typically provided on the optical switching chiplet 420 on the module 200, and may be constituent parts of the receiving optical switching structures 112.

The optical switching chiplet 410 is in communication with the FPGA 202 and the controller 204, so that the controller can control the components of the transmit portion 102 and the receive portion 104 located on the optical switching chiplet according to the required switching requirements (e.g. optical wavelength and optical path with the corresponding timing information).

Control signals (e.g. direct memory access control signals) may be passed across the PCIe bus 170 without adversely affecting data rates as the control plane of the network operates at a slower speed than the data plane. However, in some alternative embodiments it is envisaged that control signals may be transmitted in the optical domain over additional independent (control signal) optical fibres 450.

Thus, the network sub-system 401 provides an advantageous network architecture in which the components implementing the optical-electrical conversion functions are provided on a data conversion chiplet 410 that is remoted from the components implementing the optical switching functionality located on the separate optical switching chiplet 420. As outlined above, this avoids the bottleneck of sending data between the CPU card 150 and the module 200 in the electrical domain over a PCIe bus 170 (or other electrical interconnect), meaning that data can flow from the processing unit 101 on the CPU card 150 to the switching components at a higher data rate. This also avoids the power loss of transmitting high speed data over electrical interconnect copper tracks, reducing power consumption and cost.

The data conversion chiplet 410 that comprises the modulators 108 and photodetection devices 116 requires relatively small amounts of power (for example compared to the wavelength-tuneable lasers 106 of the optical switching chiplet). Consequently, the data conversion chiplet 410 can be located close to the processing unit 101 on the CPU card 150. Due to their low power consumption, it is envisaged that multiple data conversion chiplets 410 may be located close to the processing unit 101 for maximum scalability of the network. Once the electrical data signals have been converted to the optical domain for communication to the optical switching chiplet 420 over the optical fibres 450, the CPU card 150 and the module 200 can be located further apart for enhanced flexibility of the node architecture.

In the schematic view of Figure 4, the processing unit 101 and the data conversion chiplet 410 are shown as separate components for clarity. This may be the case in practice; however, in preferred embodiments the processing unit and the data convention chiplet may be co-packaged or in-packaged in a single physical package. This advantageously minimises the electrical path between the processing unit 101 and the data conversion chiplet 410. In some case the package may include the EICs 212.

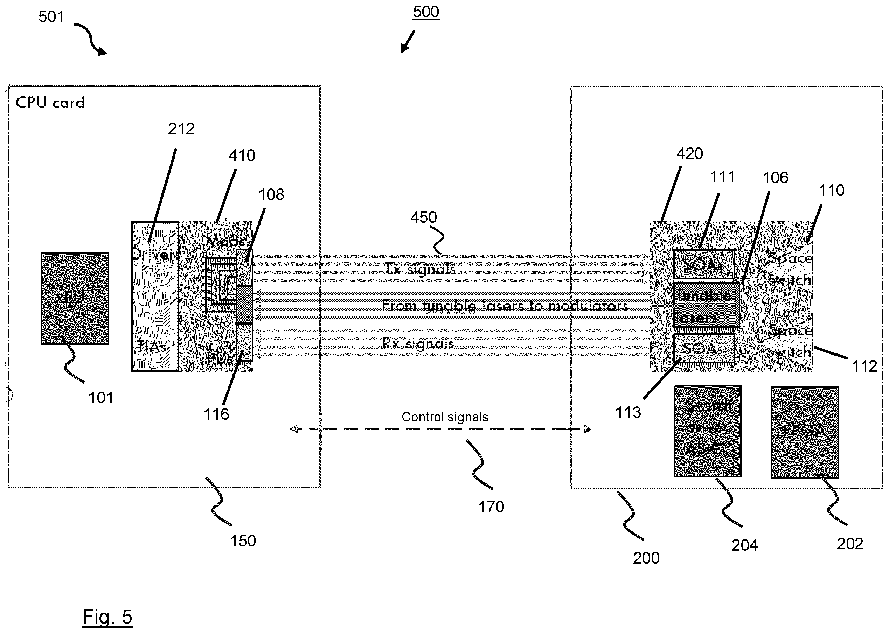

Figure 5 illustrates an example node 500 implementing a network sub-system 501 according to an embodiment of the present invention. The node 500 is similar to the node 400 described with reference to Figure 4, with the CPU card 150 comprising a data conversion chiplet 410 and associated EIC 212 located in close proximity to the processing unit 101. In this embodiment, the data conversion chiplet 410 and the EICs 212 are integrated with each other and provided on a single chip. The module 200 (e.g. a NIC or switch-laser card) comprises an optical switching chiplet 420 in optical communication with the data conversion chiplet 410 via optical fibres 450 (typically implemented as a ribbon fibre). The optical wavelength and space switching parameters for control of the optical switching chiplet are controlled by the FPGA 202 and controller 204 located on the NIC 200. Control signals 170 may be communicated between the CPU card 150 and the module 200 200 across an electrical interconnect such as PCIe bus.

The node 500 comprises Y=4 independent optical datapaths as schematically illustrated by the number of optical fibre arrows 450 between the data conversion and optical switching chiplets 410, 420.

As with example node 400, the data conversion chiplet 410 comprises modulators 108 and photodetectors 116, and does not include an optical light source. In the transmission portion, the modulators 108 on the data conversion chiplet 410 receive wavelength switched light from the tuneable lasers 106 located on the optical switching chiplet 420, with the modulated (converted) light being re-directed to the optical switching chiplet and to 1xX optical switching structure 110 via an amplifier 111. In this case, the amplifier is a semiconductor optical amplifier (SOA). Control of the wavelength and signal path is provided by the FPGA 202 and controller 204.

In the receive portion, optical data signals are received at the node 500 at Xx1 switching structure 112, and are communicated in the optical domain via SOA amplifier 113 located on the optical switching chiplet 420 to the photodetectors 116 on the data conversion chiplet 410.

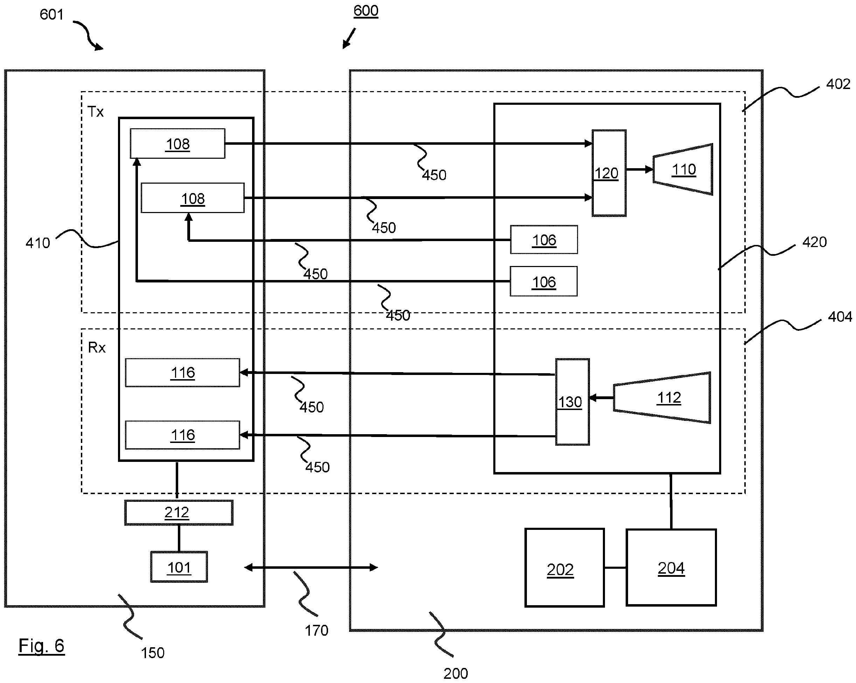

Figure 6 illustrates an example node 600 comprising a network sub-system 601 according to a further embodiment of the invention. The node 600 is similar to the node 400 depicted in Figure 4; however, the output of each modulator 108 of the transmit datapaths is sent to a multiplexer 120 located on the optical switching chiplet that multiplexes (combines) the optical signals onto a single medium (e.g. waveguide) which is followed by a single 1xX transmission optical switching structure 110. Similarly, in the receive portion 404, there is a single Xx1 optical combiner 112. The received optical data signals are amplified to the required power level and transmitted to a single demultiplexer/filter 130 that separates the received X optical data signals and sends these over the ribbon fibre to the respective photodetectors 116 on the optical conversion chiplet 420. The optical data signals are then converted back to electronic form and communicated to the processing unit 101 via the EIC 212.

In the embodiments descried above with reference to Figures 4 to 6, the processing unit 101 and the data conversion chiplet 410 are shown as separate components. This may be the case, for example the data conversion chiplet may be provided as a pluggable unit. However, in preferred embodiments, the data conversion chiplet 410 is co-packaged or in-packaged with the processing unit 410 to advantageously minimise the RF path distance between them.

In any of the embodiments described herein, the optical switching chiplet may be provided on a single physical unit that may be pluggable.

## Claims

1. A network sub-system for an optical network, the optical network comprising a plurality of nodes connected by optical signal paths, the network sub-system being provided at a node of the plurality of nodes and comprising:
a network termination unit;
a data conversion chip configured to communicate electrical data signals to and from the network termination unit, and further configured to convert between electrical data signals and optical data signals;
an optical switching chip configured to direct optical data signals across the optical network in accordance with selected optical signal path and wavelength; wherein
the network termination unit and the data conversion chip are provided on a first circuit module;
the optical switching chip is separate from the data conversion chip; and
the data conversion chip and the optical switching chip are in optical communication with each other, whereby optical data signals for communication to and from said node are communicated between the data conversion chip and the optical switching chip.

2. The network sub-system of claim 1, wherein the first circuit module is a central processing unit, CPU, card.

3. The network sub-system of claim 1 or claim 2, wherein the data conversion chip and the network termination unit provided in the same physical package, preferably wherein the data conversion chip and the network termination unit are co-packaged or in-packaged.

4. The network sub-system of any of the preceding claims, wherein the optical switching chip is provided on a second circuit module separate from the first circuit module.

5. The network sub-system of any of the preceding claims, wherein the data conversion chip and the optical switching chip are in optical communication with each other via one or more optical fibres.

6. The network sub-system of any of the preceding claims, wherein the data conversion chip comprises a modulator configured to modulate received light from a light source provided remotely from the data conversion chip, the light from the light source being provided at a selected optical wavelength for propagating an optical data signal to the optical network.

7. The network sub-system of claim 6, wherein the network sub-system comprises an optical loop path whereby modulated light from the modulator is directed to the optical switching chip.

8. The network sub-system of claim 6 or claim 7, wherein the light source comprises at least one of:
a fixed wavelength laser;
a tunable laser configured to emit different wavelengths of light
a plurality of fixed wavelength lasers having different wavelengths of light.
a plurality of tunable lasers configured to emit different wavelengths of light.

9. The network sub-system of any of the preceding claims, wherein the data conversion chip comprises at least one photodetection device configured to receive an optical data signal from the optical switching chip, and wherein the at least one photodetection device is configured to convert the received optical data signal to electrical form.

10. The network sub-system of any of the preceding claims, further comprising one or more electronic integrated circuits, preferably provided on the first circuit module, the one or more electronic integrated circuits comprising at least one electronic amplification device for amplifying an electronic signal provided by the data conversion chip and/or at least one electronic driver device for driving at least one component of the data conversion chip,

11. The network sub-system of claim 10, wherein the one or more electronic integrated circuits are integrated with the data conversion chip.

12. The network sub-system of any of the preceding claims, wherein the optical switching chip comprises a transmission switching structure configured to direct an optical data signal received from the data conversion chip to a selected output port of the node for propagation over at least one optical signal path in the optical network to at least one other node of the plurality of nodes.

13. The network sub-system of any of the preceding claims, wherein the optical switching chip comprises
a receiving switching structure configured to direct an optical data signal from an input port of the node to the data conversion chip for reception by at least one photodetection device of the data conversion chip that is configured to convert the received optical data signal received to electrical form.

14. A network sub-assembly for an optical network, the optical network comprising a plurality of nodes connected by optical signal paths, the network sub-assembly being provided at a node of the plurality of nodes and comprising:
a data conversion chip configured to communicate electrical data signals to and from a network termination unit of the node provided on a first circuit module, and further configured to convert between electrical data signals and optical data signals;
an optical switching chip configured to direct optical data signals across the optical network in accordance with selected optical signal path and wavelength; wherein
the data conversion chip is configured to be provided on the first circuit module;
the optical switching chip is separate from the data conversion chip; and
the data conversion chip and the optical switching chip are in optical communication with each other, whereby optical data signals for communication to and from said node are communicated between the data conversion chip and the optical switching chip.

15. The network sub-system or sub-assembly of any of the preceding claims, wherein the network termination unit is any one of: a processing unit, a storage unit, a switching unit, a memory unit.
